## Europäisches Patentamt
## European Patent Office
## Office européen des brevets

(19)

(11) Veröffentlichungsnummer : **0 131 616**
**B1**

(12) # EUROPÄISCHE PATENTSCHRIFT

(45) Veröffentlichungstag der Patentschrift :
**25.03.87**

(21) Anmeldenummer : **84900607.7**

(22) Anmeldetag : **20.01.84**

(86) Internationale Anmeldenummer :
**PCT/DE 84/00014**

(87) Internationale Veröffentlichungsnummer :
**WO/8402998 (02.08.84 Gazette 84/18)**

(51) Int. Cl.⁴ : **G 10 K 11/16, E 04 B 1/82,**
**B 60 R 13/08, B 32 B 5/18,**
**E 04 B 1/86**

(54) SCHALLABSORPTIONSPLATTE.

(30) Priorität : **20.01.83 DE 3301682**
**11.10.83 DE 3336850**

(43) Veröffentlichungstag der Anmeldung :
**23.01.85 Patentblatt 85/04**

(45) Bekanntmachung des Hinweises auf die Patenterteilung : **25.03.87 Patentblatt 87/13**

(84) Benannte Vertragsstaaten :
**AT BE CH DE FR GB LI LU NL SE**

(56) Entgegenhaltungen :
**DE-A- 1 154 923**
**DE-A- 2 937 389**
**FR-A- 2 368 111**
**GB-A- 1 510 712**

(73) Patentinhaber : **Illbruck GmbH**
**Burscheider Strasse 454**
**D-5090 Leverkusen 3 (DE)**

(72) Erfinder : **FRANK, Werner**
**Gerstenschlag 7**
**D-5060 Bergisch-Gladbach (DE)**
Erfinder : **IRRGEHER, Fritz**
**Kockelsberg 30**
**D-5090 Leverkusen-Hitdorf (DE)**

(74) Vertreter : **Rieder, Hans-Joachim, Dr.**
**Corneliusstrasse 45 Postfach 11 04 51**
**D-5600 Wuppertal 11 (DE)**

Jouve, 18, rue St-Denis, 75001 Paris, France

EP 0 131 616 B1

## Beschreibung

Die Erfindung betrifft eine Schallabsorptionsplatte gemäß Gattungsbegriff des Hauptanspruches.

Es sind luftschallschluckende verformte Platten aus tiefgezogenem und verpreßtem Vlies aus Polyestern vorbekannt (DE-OS 3 039 651), deren Schallabsorptionswirkung auf dem Strömungsprinzip beruht. Die Dicke liegt zwischen 1-3 mm und der Strömungswiderstand liegt zwischen 300-1 000 Ns/m³. Sie besitzen einen inneren Träger aus Vlies, wobei im Bereich der Kreuzungspunkte der Vliesfaser eine autogene Verschweissung vorliegt, und es ist zusätzlich eine Verklebung durch ein Bindemittel vorgesehen. Beiderseits des Vlieses befinden sich luftdurchlässige äußere Abdeckschichten, deren feste Zuordnung zum Vlies wiederum den Einsatz eines Bindemittels erfordert. Die Herstellung solcher Schallabsorptionsplatten ist schwierig. Die Erzielung eines optimalen vorbestimmten Strömungswiderstandswertes ist praktisch nicht möglich, und zwar wegen der zusätzlich eingesetzten verklebenden Bindemittel und wegen der unvorherbestimmbaren Anzahl der untereinander verschweißenden Kreuzungspunkte der Vliesfaser. Da letztere auch die Biegefestigkeit der gesamten Platte bestimmen, läßt sich auch diese nicht in beabsichtigter Genauigkeit vorher berechnen und beeinflußt insoweit überdurchschnittlich sogar den Strömungswiderstand. Das beeinträchtigt die Einsatzmöglichkeiten, insbesondere die stabile Erhaltung einer bestimmten Abstandsstellung zu einer schallreflektierenden Wand beim Einsatz in erschütterungsbelasteten Gegenständen, wie Kraftfahrzeugen.

Es ist auch bereits bekannt, zur Schallabsorption mehrschichtige Schaumstoffplatten mit einer Gittereinlage einzusetzen. Diese arbeiten auf dem Prinzip möglichst großer Dicke und Massenbeschwerung. Die Gittereinlage soll eine später gebogene Form aufrechterhalten. Sie liegt zwischen zwei beiderseitige Schaumstoffplatten eingebettet. Diese müssen zur Erzielung einer stabilen Verbundform untereinander verbunden, z. B. verklebt sein. Da diese Lösungen nicht auf dem Prinzip der Strömungsabsorption arbeiten, ist diese mittlere u. U. luftundurchlässige Klebeschicht dort tragbar.

Daneben sind noch Schallabsorptionskörper bekannt (DE-A-2 742 768 bzw. FR-A-2 368 111), bei denen ein luftdurchlässiger, starrer Tragkörper an der Vorderseite mit Vertiefungen versehen wird, welche mit einer diese überspannenden Membran verschlossen sind. Die dadurch gebildeten geschlossenen Räume sollen über schallreflektierende Wirkung der Membran die Energie absorbieren. Der Aufbau ist kompliziert. Der Einsatz ist begrenzt. Das Schallabsorptionsverhalten ist nicht optimal, geschweige den optimal anpaßbar an die jeweils zu absorbierenden Frequenzen.

Der vorliegenden Erfindung liegt die Aufgabe zugrunde, eine gattungsgemäße Schallabsorptionsplatte bei einfacher Herstellung und stabiler, günstiger Gebrauchsform so auszugestalten, daß der Strömungswiderstand über die gesamte Platte gleichmäßig und weitgehendst durch die Ausgangsmaterialien vorherbestimmbar ist.

Gelöst ist dies durch die im Kennzeichen des Hauptanspruches angegebene Erfindung.

Zufolge dieser Ausgestaltung ist eine leicht herstellbare Schallabsorptionsplatte geschaffen, welche auch unter Einhaltung der angestrebten Strömungswiderstandswerte in Dicken bis zu 10 mm erstellt sein kann und einen Strömungswiderstandsbereich umfassen kann von 200-1 200 Ns/m³. Bei der Herstellung sind keine zusätzlichen Klebstoffe oder dergleichen notwendig, welche die Strömungswiderstandswerte schwer vorhersehbar beeinflussen würden. Zur Verbindung der Schaumstoffschichten miteinander und mit der Gittereinlage dienen vielmehr die Schmelzmassen der Gitterfäden. Der Grad der Verschmelzung kann dabei angepasst werden durch das Maß der Heiß-Verdichtung. Die überwiegend nur punktförmigen Verbindungen an den Gitterkreuzungspunkten bringen die geringstmögliche Verfälschung des Strömungswiderstandes. Die geordnete Anordnung der Kreuzungspunkte gibt dabei eine gute Möglichkeit, um diese Änderung der Strömungswiderstandswerte durch die Verbundherstellung vorherzusehen. Die Oberflächenprofilierung beim Heißverdichten führt auch zu einer stabilen Endform, die leicht herstellbar ist, weil die Gitterkreuzungspunkte vor dem Verschmelzen noch Bewegungsstellen sind und erst in die starre auch zu den Schaumstoffschichten tretende Verbindung kommen nach Erhärtung des Schmelzmasse.

Wählt man die Heißverdichtung zonenweise unterschiedlich stark so kann man dabei gleichzeitig eine angepasste Oberflächenprofilierung erhalten. Erzeugt man den Strömungswiderstandsentwert der gesamten Platte dadurch, daß man die Breitseite der einen Schaumstoffschicht verhautet, wobei dann die Luftdurchlässigkeit der Haut einen wesentlichen Anteilsfaktor für den Strömungswiderstand bildet, so erreicht man eine weitere Verringerung des relativen Einflusses der Befestigungsstellen auf die Gleichförmigkeit des Strömungswiderstandes integriert über die ganze Plattenfläche. Formt man der Platte einen entsprechend vorgesehenen Auflagerand an, was wegen der graduellen Steigerung des Schmelzverbundes zwischen Gittereinlage und Schaumstoff auch zu einem sehr stabilen Auflagerand führt, so hat man sofort die Mittel angeformt, die bei solchen strömungsoptimierten Schallabsorptionsplatten notwendig sind, um die Abstandsstellung zur schallreflektierenden Wand zu bekommen.

Der Gegenstand der Erfindung ist nachstehend anhand eines zeichnerisch veranschaulichten Ausführungsbeispieles näher erläutert. Es zeigen :

Figur 1 die Unteransicht der erfindungsgemäßen Schallabsorptionsplatte als auf eine Kraftfahrzeugmotorhaube abgestimmtes Formteil,

Figur 2 die Seitenansicht hierzu,

Figur 3 den Schnitt gemäß Linie III-III in Fig. 1,

Figur 4 die Herausvergrößerung einer topfartig eingezogenen Partie, und zwar in etwa natürlichem Maßstab und

Figur 5 den Schnitt gemäß Linie V-V in Fig. 4.

Die als Formteil ausgebildete Schallabsorptionsplatte S setzt sich aus drei Schichten zusammen. Es handelt sich hierbei um eine aus verdichtetem Schaumkunststoff bestehende untere, d. h. der Geräuschquelle zugewandte Schicht 1 und eine entsprechende Schicht 2. Letztere liegt wand- oder haubendeckelseitig, also der schallreflektierenden Fläche zugekehrt. Zwischen diesen beiden Schichten ist ein schalltransparentes, unelastisch biegbares Gitter 3 als dritte Schicht eingebettet. Beim Ausführungsbeispiel ist ein Glasfasergewebe mit thermisch ansprechender Harzauflage vorgesehen. Die Biegefestigkeit der ganzen Platte liegt bei etwa 20 Newton/mm². Das so selbsttragende Formteil ist unter Nutzung der Löcher 4 zum Durchtritt von Befestigungselementen mit Abstand vor einer Wand, wie bspw. einer Motorhaube, befestigt ist.

Die Schallabsorptionsplatte S besteht aus offenzelligem, weichelastischem Kunstschaumstoff. Der Strömungswiderstand der insgesamt etwa 3-5 mm dicken Schaumstoffplatte S einschließlich Gitter liegt zweckmäßig zwischen 200 und 1 200 Ns/m³. Unter Berücksichtigung des in Frage kommenden Frequenzbereichs (im Motorraum eines Kraftfahrzeuges) beträgt der Strömungswiderstand optimal 80 Ns/m³. Die angegebenen Grenzbereiche bis 200 Ns/m³ einerseits und 1 200 Ns/m³ andererseits bringen aber auch noch erhebliche Schallabsorptionseffekte gemessen an dem, was man bei sonst üblichen — dämmenden — Schaumstoffen an Dicke aufwenden müßte, um den gleichen Schallisolationswert zu erreichen.

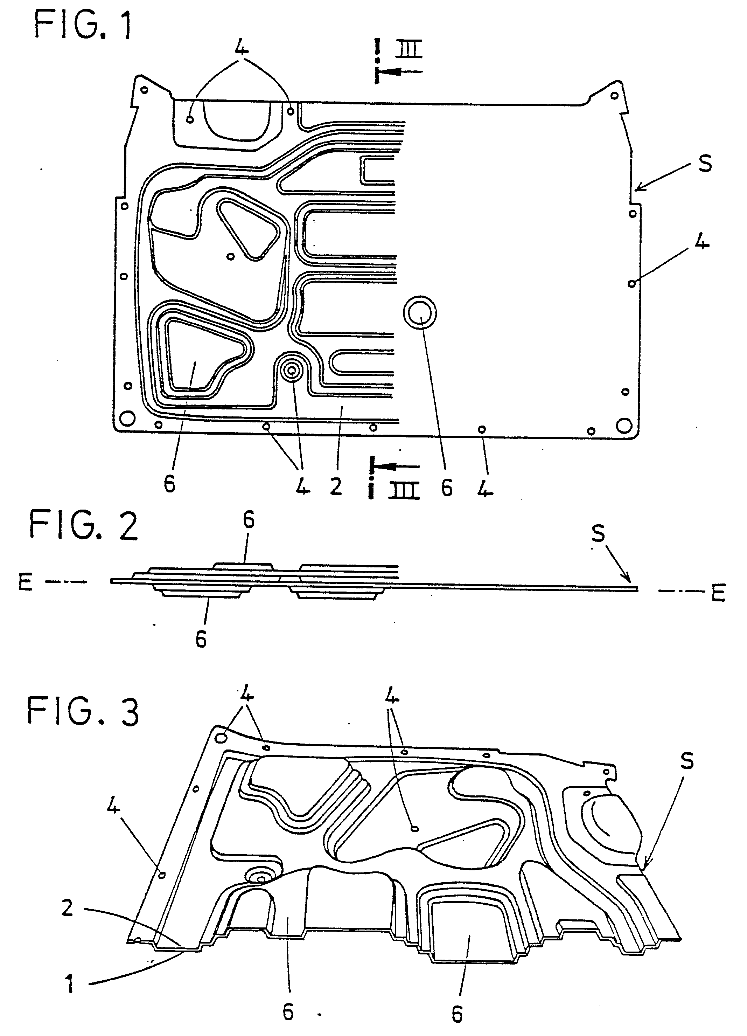

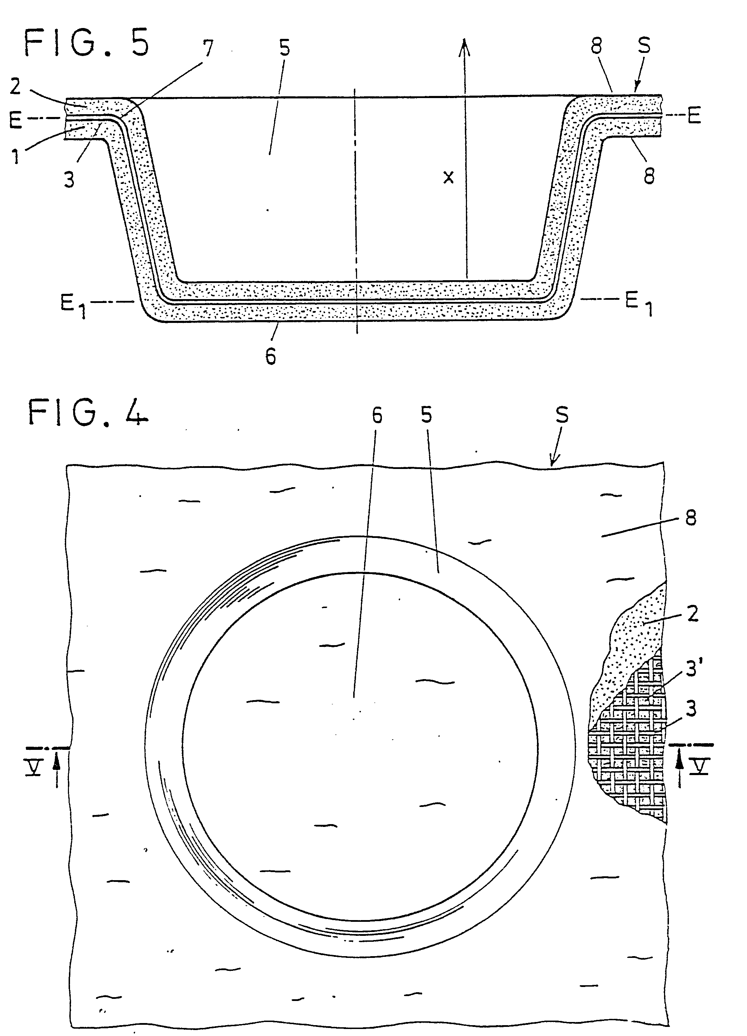

Durch Ausstellen partieller Abschnitte aus der allgemeinen Plattenebene E-E wird der Abstand zur schallreflektierenden Wand variiert. Dieser Abschnitt ist nach Fig. 5 als topfförmige Einziehung 5 gestaltet. Einer dieser frequenzabhängig unterschiedlich zu wählenden Abstände ist mit × bezeichnet. Er entspricht etwa λ/4 (bzw. einer ganzzahligen Vielfachen davon) des vordergründig zu absorbierenden Frequenzbereiches. Die Wellenbäuche der reflektierten Welle treffen mit der dem Schallgeber näherliegenden, also vorverlagerten Ebene $E_1$-$E_1$ zusammen. Wie Fig. 1 und dem Relief nach Fig. 3 entnehmbar, können die vorverlagerten Plattenpartien 6 stufenweise vor- oder zurückgestülpt sein, dies im Interesse einer vibrationsfreien Struktur bei vor allem besonders tief ausgeprägten Partien 6. Der Schaumkunststoff toleriert entsprechende längenbezogene Drehungen bestens. Das Gitter 3 als thermisch verformbares Material begünstigt dies.

Die Befestigungslöcher 4 sind so placiert, daß die günstigsten Verbindungsstellen zwischen diesen Bereichen erfaßt werden.

Wie Fig. 5 entnehmbar, sind die Schichten 1 und 2 im wesentlichen unter Beibehaltung einer gleichen Schichtdicke und Struktur — wegen der nur geringen Dicke von jedenfalls unterhalb 10 mm — um die gerundeten Wölbungskanten 7 gezogen bzw. in die Innenecken eingedrückt. Die nur ganz geringen Dickenunterschiede sind dem Schallabsorptionseffekt nicht abträglich, weil sich die Masse und insbesondere der Luft-Durchlaß-Strömungswiderstand als solcher nicht ändert.

Die Verbindung der Schichten 1 und 2 ist im Wege der Heißsiegel Verbindung gegeben, wobei die Kunststoffmasse, welche die Gitterfasern verbindet, gleichzeitig (über Wärme-Erweichung) zu den mit der Gittereinlage flächenverbundenen Schaumstoff-Schichten darstellt. Die thermische Verbindung läßt evtl. zusätzlich die Schaumstoffschichten über die Gewebemaschen 3' in Verbund treten.

Einhergehend mit dieser komprimierten Verformung auf den angegebenen Luft-Strömungswiderstand kann durch Abschmelzen der Außenbereiche des Schaumgerüsts eine schützende Haut 8 gebildet werden, welche am Fertigprodukt das Eindringen von Feuchtigkeit, Öl etc. unterbindet. Die Haut 8 läßt sich auch am porösen Schichtmaterial vorab schon erzeugen. Insbesondere, wenn eine solche Haut ganz oder überwiegend den Strömungswiderstandswert bestimmt — durch ihre angepaßte Porösität —, liegt sie auf der der schallreflektierenden Wand abgekehrten Breitseite der Platte.

**Patentansprüche**

1. In Abstandsstellung zu einer schallreflektierenden Wand anbringbare, durch Verpressen gebildete Schallabsorptionsplatte (S) in einer Dicke von 1-10 mm, mit einem Strömungswiderstand von 200-1 200 Ns/m³ und einem inneren Träger mit untereinander verschweißten Kreuzungspunkten und äußeren luftdurchlässigen Abdeckschichten, dadurch gekennzeichnet, daß die Abdeckschichten (1, 2) aus offenzelligem Schaumstoff bestehen, welcher durch Heißverdichten dickererer Schichten (1, 2) auf den Strömungswiderstand gebracht ist und der Träger als zwischen die Abdeckschichten (1, 2) eingesiegelte Gittereinlage (3) gestaltet ist, wobei eine Kunststoffmasse, welche die Gitterfäden verbindet, gleichzeitig die Verbindung zum Schaumstoffmaterial der Abdeckschichten (1, 2) darstellt.

2. Schaumstoffplatte nach Anspruch 1, dadurch gekennzeichnet, daß sie zonenweise unterschiedlich stark verdichtet ist.

3. Schaumstoffplatte nach Anspruch 1 dadruch gekennzeichnet, daß der Strömungswiderstands-Endwert durch Verhautung der einen Schicht (1 oder 2) auf ihrer Breitseite erzielt ist.

4. Schaumstoffplatte nach Anspruch 1, dadurch gekennzeichnet, daß die Randzone der Platte einen von der übrigen Erstreckungszone der Platte überstehenden Auflagerand besitzt, dessen Überstand dem Vielfachen der Plattendicke entspricht.

## Claims

1. A sound-absorption panel (S) 1-10 mm thick, which may be applied to a sound-reflecting wall in a position spaced from it and which is formed by pressing, having a resistance to flow of 200-1 200 Ns/m$^3$ and an inner support with points of cross welded together and outer cover layers permeable to air, characterized in that the cover layers (1, 2) consist of open-celled foam material which through hot compression of thicker layers (1, 2) is brought up to the resistance to flow and the support is formed as a grid inlay (3) sealed in between the cover layers (1, 2), with a plastics composition which connects the threads of the grid forming at the same time the connection of the cover layers (1, 2) to the foam material.

2. A foam material panel as in Claim 1, characterized in that it is compressed zone by zone to different extents.

3. A foam material panel as in Claim 1, characterized in that the final value of resistance to flow is achieved through formation of a skin on the wide face of one layer (1 or 2).

4. A foam material panel as in Claim 1, characterized in that the edge zone of the panel has standing out from the remaining extent of the panel a supporting edge the overhang of which corresponds with a multiple of the panel thickness.

## Revendications

1. Panneau d'absorption phonique (S), pouvant être placé à distance d'une paroi réfléchissant les sons et formé par compression avec une épaisseur de 1 à 10 mm, avec une résistance à l'écoulement de 200 à 1 200 Ns/m$^3$ et avec un support interne comportant des points de croisement soudés entre eux et des couches extérieures de recouvrement perméables à l'air, caractérisé en ce que les couches de recouvrement (1, 2) se composent d'une matière expansée à cellules ouvertes, qui est pourvue de la résistance à l'écoulement appropriée par compression à chaud de couches assez épaisses (1, 2) et dans laquelle le support est profilé sous la forme d'une structure réticulée incorporée (3) qui est scellée entre les couches de recouvrement (1, 2), auquel cas une masse de matière plastique, qui relie les fils de la structure réticulée, établit simultanément la liaison avec la matière expansée des couches de recouvrement (1, 2).

2. Panneau en matière expansée selon la revendication 1, caractérisé en ce qu'il est comprimé par zones à des degrés fortement différents.

3. Panneau en matière expansée selon la revendication 1, caractérisé en ce que la valeur finale de la résistance à l'écoulement est obtenue par recouvrement d'une des couches (1 ou 2) d'une pellicule sur sa face large.

4. Panneau en matière expansée selon la revendication 1, caractérisé en ce que la zone de bord du panneau comporte un bord d'appui faisant saillie du reste du panneau et dont la distance de saillie est égale à un multiple de l'épaisseur du panneau.

# 0 131 616

## FIG. 1

## FIG. 2

## FIG. 3

# FIG. 5

# FIG. 4